# EUROPEAN PATENT APPLICATION

(11) **EP 2 412 969 A2**
(43) Date of publication of application: **01.02.2012**
(21) Application number: 11176183.9
(22) Date of filing: 01.08.2011
(51) Int. Cl.: F03B 13/20

(54) **Energy collection using intermediary buffering**

(30) Priority: 30.07.2010 US 847466
(71) Applicant: Neptune Wave Power Llc, Dallas TX 75204 (US)
(72) Inventor: Montgomery, William S., Dallas, TX Texas TX 75205 (US); Smith, Jeremy, East Hampstead, NH New Hampshire NH 03826 (US); Cancilla, Dave, Dallas, TX Texas TX 75204-1430 (US)
(74) Representative: Jackson, Richard Eric

(57) **Abstract**

The present invention is a device for converting rotational energy into useable power by buffering the created rotational energy from the rotational energy used to create the output power. Thus, in one embodiment, a pendulum within a buoy is used to create rotational energy from ocean wave movement and the created rotational energy then drives a hydraulic pump which in turn drives a hydraulic motor to create a second rotational force which is then used to create an electrical output. In this manner, the hydraulic fluid acts as the buffer between the wave-created rotational energy and the rotational energy actually used to create the output electricity.

## Description

### CROSS-REFERENCE TO RELATED APPLICATIONS

This application claims priority to U.S. Patent Application No. 12/847,466, entitled "ENERGY GENERATION USING INTERMEDIARY BUFFERING ", filed on July 30, 2010; and is related to commonly owned U.S. Patent Application No. 12/777,996, entitled "SYSTEM AND METHOD FOR CONVERTING OCEAN WAVE ENERGY INTO ELECTRICITY", filed on May 11, 2010, the disclosure of which are hereby incorporated herein by reference.

### TECHNICAL FIELD

The present disclosure relates to the generation of electric power. More specifically, the present invention relates to a method and apparatus for renewable energy generation using a pressure transfer material as an intermediary clutch between a rotary motion generator and an energy generator operating from generated rotary motion. Even more specifically, this disclosure relates to converting ocean wave energy to electricity and the exploitation thereof.

### BACKGROUND OF THE INVENTION

The notion of harnessing the power of ocean waves has held mankind's attention for quite some time. As such, there have been several inventions directed towards converting the kinetic energy of waves into electrical energy. However, to date, such inventions have been largely ineffective. One such invention, disclosed in U.S. Patent No. 3,231,749 (the '749 Patent), provides a "Wave Power Generator" having a buoy with a centrally mounted vertical shaft and a pendulum fixed to the shaft for causing the shaft to rotate with the circular motion of the pendulum. The '749 Patent further includes a weight fixed to the outer end of the pendulum and a generator fixed to the outer side of the weight.

The '749 Patent calls for a generator mechanism to be placed along the peripheral of the pendulum arm and employs an outer planetary gear to generate power. As a practical matter, factors such as manufacturing complexity, mechanical stress, and thermal expansion would render the disclosed invention unreasonably expensive to maintain and inefficient to use. For instance, it is unlikely that the outer planetary gear would be able to maintain a perfectly circular shape, absent expensive bracing. As is known in the art, as the diameter of the outer gear increases, the mass of the structural support required to maintain circularity of the pendulum's motion under operational stress increases at a ratio greater than one-to-one. In the likely event that the outer planetary gear becomes eccentric, the pendulum mechanism would become bound or jammed, rendering the system less efficient or inoperable. Avoiding the problem of eccentricity would best be negated by placing some sort of spring-loaded device or other suspension mechanism along the pendulum to allow the pendulum to move freely. Such a mechanism also would be unreasonably expensive, complex, and difficult to maintain. Moreover, the pendulum's operating efficiency would be reduced as the suspension mechanism absorbs a portion of the pendulum's kinetic energy.

Put another way, placing the generator mechanism far from the center of rotation also places the torque moment far from the center of rotation. When the torque moment is too far off-center, any eccentricity in the rotating pendulum is amplified.

The '749 Patent is inadequate for other reasons as well. For instance, the disclosed invention does not address how torque exerted on the buoy by the pendulum is handled. Without an effective "anti-torque" mechanism, the mechanical resistance of the generator will cause the buoy to rotate with the pendulum as it swings within the buoy. Because the generator is mounted to the buoy itself, the generator will see no rotation at its own frame of reference. This results in the buoy simply rotating in the ocean, and thus completely ineffective for producing energy.

U.S. Patent Number 7,453,165 entitled "METHOD AND APPARATUS FOR CONVERTING OCEAN WAVE ENERGY INTO ELECTRICITY"; U.S. Patent Number 7,737,569 entitled "SYSTEM AND METHOD FOR CONVERTING OCEAN WAVE ENERGY INTO ELECTRICITY"; U.S. Patent Application Serial Number 12/777,996 entitled "SYSTEM AND METHOD FOR CONVERTING OCEAN WAVE ENERGY INTO ELECTRICITY"; U.S. Patent Number 7,629,704 entitled "METHOD AND APPARATUS FOR CONVERTING OCEAN WAVE ENERGY INTO ELECTRICITY; and U.S. Patent Application Serial Number 12/607,878; hereby incorporated by reference, show various systems for using wave energy for the generation and distribution of electrical energy. While each of these is valuable and operated well, a problem still remains in that any renewable energy source, whether it be ocean waves, wind, or any other mechanism that creates rotary motion, inherently varies in pressure, temperature and/or force (speed). Thus, the output is subject to large variations over time. Normally, however, when it is desired to produce, for example, electricity, it is most efficient to do so with a constant source of rotational energy. Rotational forces created by waves, or by air flow, typically are not constant, thereby causing inefficiencies and other problems with power generation.

### BRIEF SUMMARY OF THE INVENTION

The present invention is a device for converting rotational energy into useable power by buffering the created rotational energy from the rotational energy used to create the output power. Thus, in one embodiment, a pendulum within a buoy is used to create rotational energy from ocean wave movement and the created rotational energy then drives a hydraulic pump which in turn drives a hydraulic motor to create a second rotational force which is then used to create an electrical output. In this manner, the hydraulic fluid acts as the buffer between the wave-created rotational energy and the rotational energy actually used to create the output electricity.

In one embodiment, at least one accumulator is used to equalize the hydraulic pressure between the pendulum controlled rotating shaft and the induction generator used to create the output energy.

In one embodiment, parasitic hydraulic fluid is used to control the system in order to conserve power. The parasitic energy is derived from excess pressures created by the wave motion and stored in the accumulator at times when the pendulum is turning with more force than is necessary to generate output power.

In one alternate embodiment, a plurality of primary buoys are used, each with a pendulum, a hydraulic motor, and an internal generator. One or more generation buoys are combined in one or more electrical transformers on a barge or onshore.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 depicts one embodiment of a buoy in accordance with the present invention;

FIGURE 2A depicts an embodiment of a schematic showing a hydraulic clutch and control circuit;

FIGURE 2B is a legend for use with FIGURE 2A; and

FIGURE 3 depicts an embodiment of a buoy network for generating electricity.

### DETAILED DESCRIPTION OF THE INVENTION

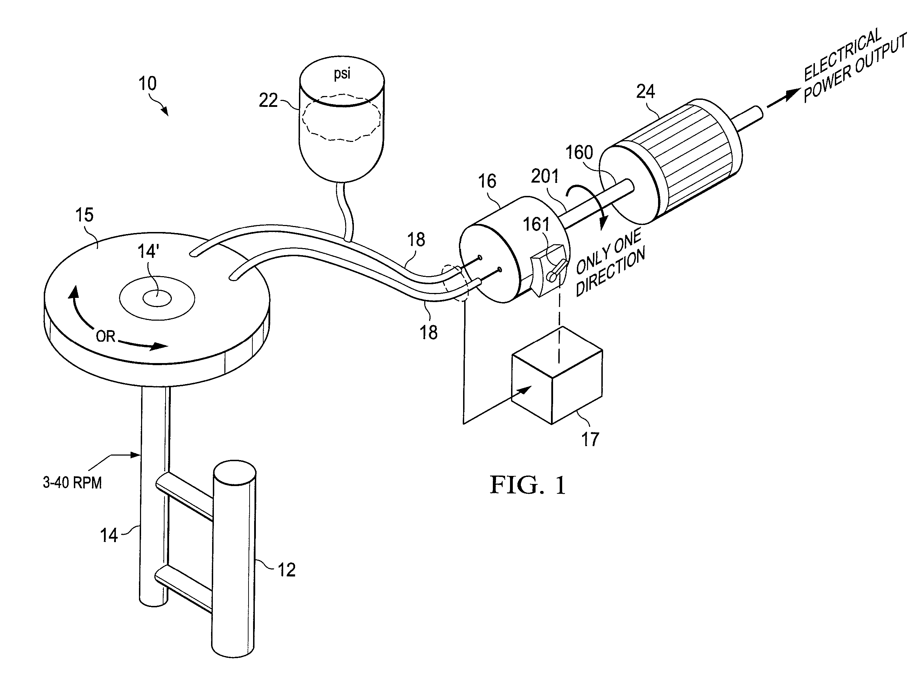

FIGURE 1 depicts one embodiment 10 of a system in accordance with the present invention. Note that the control circuitry, as well as the generator, can be within a buoy housing for use in liquid wave induced motion or within a windmill housing for use with air induced motion. In practice, some or all of these devices can be mounted external to the housing. As will be seen, the actual power generation is physically decoupled from the primary rotation source and connected thereto by hydraulic lines. Thus, if desired, power distribution can be achieved at a location separate from the location of primary rotation. In some situations, this separate location can be above or below the buoy and, in other situations, the generation can be achieved remote from the buoy where the primary rotation is created, perhaps in a separate buoy or housing.

For purposes of discussion herein it will be assumed that both primary rotation and power generation, as well as control therefore, are all within single housing 10. Pendulum 12, which can, if desired, be made adjustable, rotates vertically-oriented shaft 14 within housing 10, as the housing tilts and bounces under the influence of wave motion. This rotation, created by wave motion and captured by the pendulum rotating within the buoy, provides the kinetic energy for creating a primary source of rotation. In the embodiment shown, the rotation is from wave action of water. The rotation can be caused by any source, such as air movement or perhaps even piezoelectric contractions and/or movement. As shown, the wave action is unpredictable and non-uniform, and can be zero at times. Also, the direction of shaft rotation is at times clockwise and at other times it is counter-clockwise.

Rotating shaft 14 then causes shaft 14' of hydraulic pump 15 to rotate, either directly, or geared (not shown). The rotation of pump 15, in turn, causes hydraulic pressure within lines 18. This hydraulic pressure, as will be discussed in more detail, drives hydraulic motor 16 via control device 17. Control device 17 is, in one embodiment, a hydraulic control device, such as the SPDB Series from Hagglunds which serves to maintain a relatively constant rotation of shaft 160, thereby maintaining generator 24 at a constant rpm. This regulation is, for example, controlled by swash plate 161. Motor 16, in one embodiment, is designed for use when shaft 14 rotates, for example, between 3 and 40 rpm. In this situation, when rotation exceeds 40 rpm, a valve (not shown in FIGURE 1) opens and accumulator 22 absorbs the excess hydraulic pressure, thereby regulating the flow rate to motor 16. When the rpm from shaft 14 (14') falls below 3 rpm (or any other set number) pressure is released from accumulator 22. In this manner, the hydraulic fluid pressure and flow rate are regulated to accommodate the uncertain and changing environmental conditions of the wave (or air) input power source. The rotation caused by hydraulic motor 16 on shaft 201 then drives electrical power generator 24 to achieve a power output which can be used, perhaps in combination with other similar buoy devices, to deliver electrical power into a network for distribution into a power grid. Note that it is expected that shaft 201 turns in one direction (either clockwise or counter-clockwise) but not both directions.

In one alternate embodiment, several buoys can be used to generate electrical power which is transferred to a single central location and transferred to the utility.

In some situations it may be possible to combine the generated hydraulic pressure from many such buoys at a single location and use the accumulated pressure to drive a larger hydraulic motor, thereby generating a large amount of electricity from a single location, driven by hydraulic pressure from several locations.

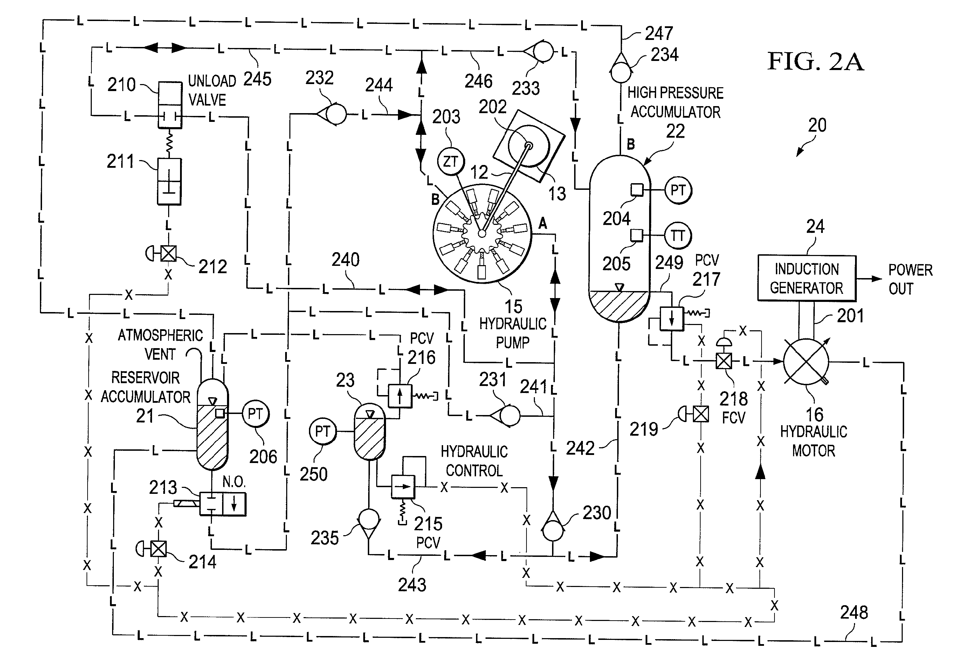

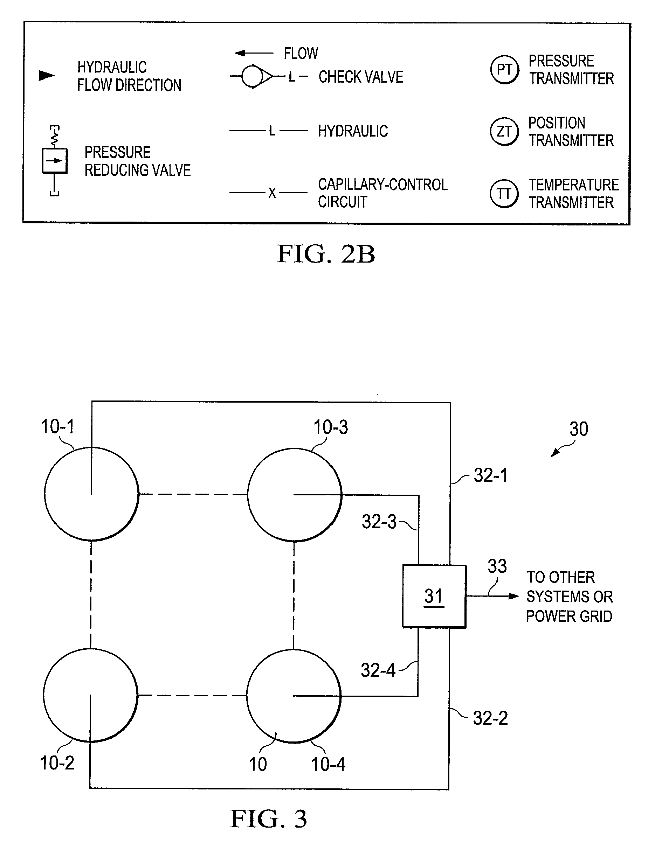

FIGURE 2A depicts an embodiment of a schematic, such as schematic 20, showing a hydraulic clutch and control circuit in accordance with one aspect of the invention. FIGURE 2B shows a legend for use with FIGURE 2A. As discussed above, hydraulic pump 15 is driven by pendulum 13, which causes the shaft of the pump to rotate either in the clockwise direction or counter-clockwise direction. Hydraulic pump 15 is, in one embodiment, a hydraulic motor, such as motor CB Series from Hagglunds. In this embodiment, the motor is being used in reverse such that instead of hydraulic fluid being pumped into the motor to make the shaft rotate, the shaft is being rotated by the pendulum and the hydraulic fluid is being pumped out. Depending upon rotation direction, the hydraulic fluid is either being pumped out of outlet A (assume counter-clockwise rotation) or outlet B (assume clockwise direction). Note that when hydraulic flow direction is out of outlet A then the fluid is replaced by fluid going into outlet B. This direction control is established by unload valve 210 which is responsive to rotation direction to open either its right or left side. Rotation direction can be determined, for example, by sensing devices 202 and 203.

Assuming counter-clockwise direction of pump 15, then hydraulic fluid under pressure exits pump 15 via outlet A and is blocked from path 240 by unload valve 210 being closed in this direction (because of the pump rotation direction). Path 241 is also blocked because of check valve 231, leaving only paths 242 and 243. Path 242 leads to high pressure accumulator 22. Path 243 leads to control accumulator 23. Accumulator 23 provides a source of pressure and a mass balance for the hydraulic control circuit. Note that the lines marked with Xs are the control lines for the system.

Assuming clockwise direction of pump 15, then hydraulic fluid under pressure exits pump 15 via outlet B and is blocked from path 245 by unload valve 210 being closed in this direction (because of the pump rotation direction). Path 244 is also blocked because of check valve 232, leaving only path 246 which leads to high pressure accumulator 22. Path 243 leads to control accumulator 23. Note that the lines marked with Xs are the control lines for the system.

High pressure accumulator 22 is also filled by path 247 from reservoir accumulator 21 via check valve 234. Accumulator 21 provides a source of new fluid to the operating system and is refilled by hydraulic fluid flowing via path 248 out of hydraulic motor 16.

Hydraulic motor 16, which is used to drive induction generator 24, typically would be driven in a single direction and under hydraulic fluid from accumulator 22 via path 249 and pressure control valve 217 and flow control valve 218. Hydraulic motor 16 is, in one embodiment, a hydraulic motor, such as motor SP Series from Hagglunds. It is important that the output rotation of motor 16 be relatively constant, and valves 217 and 218 serve this function. Thus, the output shaft rotation speed of motor 16 has been decoupled from the rotation direction and rotation velocity of buoy shaft 14.

Control accumulator 23, has various controls, including pressure transmitter 250, to control system operation in a variety of ways. For example, depending upon pressure control valve 215, control hydraulic fluid can be sent to switch 218 to adjust or turn off valve 218 which, in turn, controls the operation of motor 16. Overflow from accumulator 23 can be sent to accumulator 21 via pressure control valve 216. Note that one function accumulator 23 fulfills is to use the pressures created by the wave action for control purposes instead of requiring external power, or battery and instead of using generated output power. This parasitic power then is essentially "free" because it uses excess energy that otherwise would be wasted.

Accumulator 21 fills the system, when necessary, by sending hydraulic fluid to pump 15 via lines 244 and 241 via check valves 232 and 231, respectively.

Operating temperatures and pressures are important and the system monitors the temperatures, for example, from accumulator 22 senders (transmitters) 204 and 205, and accumulator 21 temperature sender 206 and, if necessary, cools the system using, for example, sea water. Various switches, such as switches 214, 212, 218 and 219 can be manually or hydraulically controlled to bypass or turn on or off various control portions of the system as required.

While any number of output rotational velocities can be used for induction generator 24, a preferred range for use in a buoy system is between 3 rpm and 40 rpm. Of course, the system can be set to work with any desired range of primary rotational velocities. Also, the system pressure accumulators and/or the pendulum-shaft structure should be sized and/or adjusted to take into account the expected rotational average velocities t a particular location. Since wave action varies from place to place and from time to time adjustments can be made on a periodic basis to maintain the rotational velocity within the limits of the system so that power output remains constant and relatively uninterrupted.

System pressure should be maintained at any of a number of settings depending on the current operating conditions. A preferred operation set point for the high pressure system would be, for example, 3500 psig. This set point, which could allow for a temporary condition of increased pressure (say 4500 psig), resulting from higher than average mechanical speed (rpm) input, will allow for the temporarily increase in operating electrical generation until the transient condition resolves back to the set point, which in our example is 3500 psig. Similarly during periods of low mechanical speed input, the system pressure is reset to a lower developed pressure, say 2500 psig, until conditions resolve back to the set level of 3500 psig level. The feed forward input from relative positions of the buoy shell versus current pendulum position will predict changes in the pendulum speed input in order that system components can be positioned to support contained operation. In one embodiment, both hydraulic fluid pressure as well as flow rate, are monitored and/or controlled as necessary.

FIGURE 3 depicts an embodiment of a buoy network, such as network 30, for generating electricity from a plurality of buoys 10-1 to 10-4. The buoys would be interconnected to distribution point 31 by cables 32-1 to 32-4 (or hydraulic lines in systems where hydraulic fluid is accumulated over a plurality of buoys). While only four such buoys are shown, any number or configuration can be used. Also, as discussed above, one of these buoys, or connection point 31, can be used for the actual power generation at the voltage required, while the other buoys, called primary buoys, could be used to create power, perhaps at lower levels for use in power generation. In some embodiments, hydraulic lines would interconnect the buoys. Output 33 would be electric power, or, in some embodiments, hydraulic fluid, to a distribution grid. Note that when primary buoys are used (buoys without electric power generation capability) the hydraulic (or other power transfer substance) can be transmitted to a power buoy, to a fixed station in the water, to an anchored vessel, or even to a land-based power generation station. Also, note that such a system could be used for creating temporary power for docked or anchored vessels. The power can be delivered to the vessels either in the form of electricity or, for example, in the form of hydraulic fluid for turning a hydraulic generator.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for controlling power generation, said system comprising:
at least one mechanism responsive to variable environmental conditions for creating a rotation, said rotation having variable speed and variable kinetic energy depending upon changing strengths of said environmental conditions;
a pump driven by said rotation,
a pressure transfer substance driven by said pump regardless of a rotational direction of said pump for controlling said power generation.

2. The system of claim 1 wherein said controlling further comprises:
said substance causing a power generator to rotate in a fixed direction under pressure provided by said material.

3. The system of claim 2 wherein said substance is hydraulic fluid and wherein said pump comprises a hydraulic pump.

4. The system of claim 3 wherein said power generation comprises:
a hydraulic motor powered by said hydraulic fluid; and
an electric generator connected to said hydraulic motor.

5. The system of claim 4 further comprising:
a pressure and/or flow regulator interposed between said pump and said power generator, said pressure regulator arranged to maintain a constant rotational speed of said generator regardless of instantaneous changes in said environmental conditions.

6. The system of claim 5 further comprising:
at least one controller for adjusting said pressure regulator and/or said flow regulator depending upon measured values of said environmental conditions.

7. The system of claim 3 wherein said power generator hydraulically decoupled from a hydraulic motor driven by said pressure transfer substance; and
an electric generator driven by such hydraulic motor for the purposes of generating said power.

8. The system of claim 2 wherein said system is a self-contained buoy having said power generator mounted thereon, and wherein said power generator is a hydraulic motor driving an electric generator.

9. A system according to claim 1, comprising:
a motor arranged to be driven from a hydraulic input, said motor creating a rotary output;
an electrical generator device for converting said rotary output of said motor to electrical energy; and
a hydraulic decoupled circuit for interfacing said hydraulic output with said hydraulic input so as to maintain a constant rotary motor output speed without regard to instantaneous variations in a force of said external naturally occurring forces.

10. The system of claim 9 wherein said natural forces are selected from the list of: liquid waves, air movement, piezoelectric.

11. The system of claim 10 wherein said hydraulic circuit is responsive to said instantaneous variations in said external natural forces for adjusting a stored amount of said hydraulic output.

12. The system of claim 11 wherein said hydraulic circuit comprises at least one hydraulic pressure accumulator.

13. The system of claim 12 all contained as a part of a single buoy.

14. A method for generating energy, said method comprising:
creating a first rotary output in response to external naturally occurring forces;
using said created first rotary output to provide a hydraulic output regardless of a directional rotation of said rotary output;
creating a second rotary output using said hydraulic output as an input;
converting said second rotary output to electrical energy; and
interfacing said hydraulic output with said hydraulic input so as to maintain said second rotary output at a constant angular velocity regardless of instantaneous variations in a force of said external naturally occurring forces.

15. The method of claim 14 wherein said converting comprises:
rotating a hydraulic motor under control of said hydraulic output to create said second rotating output; and
rotating a generator under control of said hydraulic motor.

16. The method of claim 15 wherein said constant angular velocity is independent of a direction of rotation of said first rotary output.

17. The method of claim 15 wherein said constant angular velocity is controlled, at least in part, by controlling hydraulic pressure and/or flow rate.

18. The method of claim 16 wherein said interfacing comprises:
interposing at least one accumulator between said output and said input.

19. The method of claim 18 wherein at least one of said accumulators is controlled, at least in part, by parasitic hydraulic fluid.

20. The method of claim 16 wherein said interfacing comprises:
adjusting said hydraulic input depending upon measured values of environmental conditions.

21. The system of claim 8 wherein said delivering comprises:
means for buffering said hydraulic fluid pressure and/or flow rate prior to delivery to said input of said hydraulic motor.

22. A method of delivering power to an anchored vessel, said method comprising:
generating power in a buoy anchored at a location in water having wave action; and
connecting a power line from said buoy to said vessel so as to deliver power to said vessel.

23. The method of claim 22 wherein said power is electricity and wherein said power line comprises electrical power lines.

24. The method of claim 22 wherein said power is a substance under pressure and wherein said power line comprises:
means for delivering said substance to a motor driven by said substance, said motor remote from said buoy.
